(19) Europäisches Patentamt
European Patent Office
Office européen des brevets

(11) **EP 2 953 716 B1**

(12) **EUROPEAN PATENT SPECIFICATION**

(45) Date of publication and mention
of the grant of the patent:
**03.05.2017 Bulletin 2017/18**

(21) Application number: **14708664.9**

(22) Date of filing: **05.02.2014**

(51) Int Cl.:
**B01J 19/00** (2006.01)    **B01J 19/24** (2006.01)
**B01J 20/28** (2006.01)    **B01D 15/22** (2006.01)
**B01F 5/06** (2006.01)    **B01F 13/00** (2006.01)
**B01J 20/281** (2006.01)

(86) International application number:
**PCT/IB2014/058808**

(87) International publication number:
**WO 2014/122592 (14.08.2014 Gazette 2014/33)**

(54) **CHEMICAL REACTOR DEVICE**

CHEMISCHER REAKTORVORRICHTUNG

DISPOSITIF RÉACTEUR CHIMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2013 BE 201300078**

(43) Date of publication of application:
**16.12.2015 Bulletin 2015/51**

(73) Proprietor: **Pharmafluidics NV**
**9052 Gent (Zwijnaarde) (BE)**

(72) Inventors:
• **DE MALSCHE, Wim**
**B-2600 Berchem (BE)**
• **DESMET, Gert**
**B-1982 Elewijt (BE)**
• **OP DE BEECK, Jeff**
**B-2600 Berchem (BE)**
• **JACOBS, Paul**
**B-9160 Lokeren (BE)**

(74) Representative: **DenK iP**
**Leuvensesteenweg 203**
**3190 Boortmeerbeek (BE)**

(56) References cited:
**EP-A1- 2 541 245    WO-A1-2008/142160**
**WO-A1-2012/025224    US-A1- 2003 049 563**

• **HE B ET AL: "FABRICATION OF NANOCOLUMNS FOR LIQUID CHROMATOGRAPHY", ANALYTICAL CHEMISTRY, AMERICAN CHEMICAL SOCIETY, US, vol. 70, no. 18, 15 September 1998 (1998-09-15), pages 3790-3797, XP000784044, ISSN: 0003-2700, DOI: 10.1021/AC980028H**

## Description

## Field of the invention

This invention is generally related to chemical reactors. More specifically, the present invention relates to chemical reactors based on a system with elongated pillar structures with a high width-to-length aspect ratio, such as, for example, a liquid chromatography system.

## Background of the invention

Chemical reactor devices that make use of liquid propagation have a large number of applications, including the production of chemical components, synthesis of nanoparticles, separation and/or extraction of components, etc. Chromatography is a specific example of an accurate way to analyze a separation technique for the separation of mixtures, for instance. There is a variety of forms of chromatography such as gas chromatography, gel chromatography, thin layer chromatography, adsorption chromatography, affinity chromatography, liquid chromatography, etc.

Liquid chromatography is typically used in pharmacy and chemistry, both for analytical applications, as well as for production applications. In liquid chromatography use is made of the difference in affinity of different substances with a mobile phase and a stationary phase. Because each substance has its own "adhesive force" to the stationary phase they are transported faster or slower along with the mobile phase and this allows certain substances to be separated. It is in principle applicable to any compound, it has the advantage that no evaporation of the material is necessary and it has the advantage that variations in temperature only have a negligible effect.

An efficient form of liquid chromatography, high-pressure liquid chromatography (also known as high-performance liquid chromatography) or HPLC, where high pressure is used in the separation process. A specific example of a technique to perform HPLC is based on chromatography columns on the basis of pillars. Since their introduction in liquid chromatography, chromatography columns based on pillars proved a worthy alternative for systems based on packed bed structures and monolithic systems. Because of the possibility of applying pillars with a high degree of uniformity and to arrange them perfectly, the dispersion originating from differences in flow paths or "eddy dispersion" can be almost completely avoided. This principle is more generally applicable in chemical reactors which are based on liquid plug flow propagation.

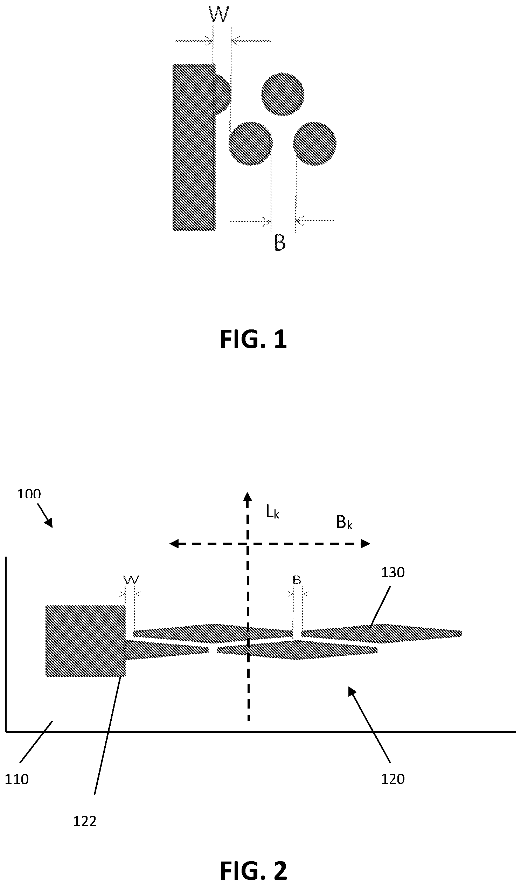

A known problem in liquid chromatography is the occurrence of edge effects. Edge effects originate from the difference in flow rate at the wall of the column and in the middle of the column. The latter can be understood as follows, whereby reference is made to FIG. 1. FIG. 1 shows a portion of a chromatography column.

When liquid moves in a chromatography column with pillars, the flow rate is then mutually influenced by channels between pillars by the flow behavior around each of these pillars. Because of the symmetry in pillar structures typically present in a passage, this results in a specific flow behavior. At the edge of the column, on the other hand, the flow behavior in a passage is not influenced symmetrically. At one side of the passage a pillar will typically influence the flow behavior, while at the other side of the passage the wall will influence the flow behavior. It is known that, unless this is corrected, this results in edge effects in the current chromatography columns resulting in a disturbed functioning of the chromatography column to occur.

The problem of edge effects is set out in Vervoort et al., Anal. Chem. (2004) 76 pp 4501 - 4507. This indicates that small structural variations of the column structures at the wall at a magnitude of only 5% in diameter of the particles can cause a fourfold increase of the band broadening (expressed as plate height) for the result, which results in a dramatic loss in performance.

One way to compensate for this is to adjust the wall of the column. Another - often deployed - way to compensate for this is to adjust the width of the passage at the edge of the column, in relation to the width between pillars in the column, away from the edge. A typical ratio then being implemented is

$$B = 1.25 \times W$$

whereby W is the width of the passage at the edge of the column (as shown in FIG. 1) and B is the width of the passage between pillars in the column, away from the edge. This implies not only that there must be a different design at the edge of the column, but also that the width of the passage at the edge of the column determines the smallest dimension for the passage and consequently that the width of the passages between the pillars mutually because of this is limited downwards - partly because of a limitation on the minimum distance to be obtained between the wall of the channel and the first pillar through limitations in the production process.

As is often seen as striving to an as small as possible interpillar distance B with the manufacturing method available, however this lower limit is not imposed by wall conditions that are not an optimal situation.

European patent application EP2541245 describes a column for chromatography wherein a side wall of the column includes a curved surface conforming to curved surfaces of the pillars. International patent application WO2012025224 describes a microfluidic device comprising a pillar structure with elongated pillars along the average flow length of the channel. International patent application WO 2008/142160 describes a distributer for a microfluidic column.

## Summary of the invention

It is an objective of the embodiments of the present invention to provide for a good chemical reactor apparatus and methods on the basis of fluid channels with pillar structures, for instance micro-fabricated pillar structures. Chemical reactor apparatuses encompass among others liquid chromatography designs, although the invention is not limited to this.

It was surprisingly determined that the embodiments in accordance with the present invention provide plug flows in chemical reactor apparatus on the basis of fluid, whereby the edge effects are reduced or are even negligible without this in itself being a limitation on the pillar distance in the fluid channel at positions away from the edge.

It is an advantage of at least some of the embodiments in accordance with the present invention that in addition to a solution for the marginal problem, the provided chemical reactor apparatuses also have a very good separation ability.

It is an advantage of at least some of the embodiments in accordance with the present invention that in addition to a solution for the marginal problem, the provided chemical reactor apparatuses can also generate a uniform retention time for various parts of a fluid flow.

It is an advantage of at least some of the embodiments in accordance with the present invention that in addition to a solution for the edge problem, the provided chemical reactor devices also imply a limited column length because of the advantageous width - length aspect ratio of the pillar structures, allowing compact devices to be obtained.

It is an advantage of at least some of the embodiments in accordance with the present invention that the edge effects can both be reduced or be negligible for components that interact with the structures and walls in the reactor as well as for components that do not interact with the structures and walls in the reactor.

It is an advantage of at least some of the embodiments in accordance with the present invention that devices are obtained in which unwanted dispersion can be reduced and in some cases can even be made negligible.

The above objective is achieved by an apparatus and a method in accordance with the embodiments in accordance with the present invention.

The present invention relates to a chemical reactor device based on a fluid flow, the chemical reactor apparatus comprising a substrate with a fluid channel defined by a channel wall, whereby the channel has an inlet and an outlet and whereby the channel has a longitudinal axis, in accordance with the average direction of a fluid flow in the channel from inlet to outlet, an ordered set of pillar structures positioned in the channel, whereby the individual pillar structures have a length in the direction of the longitudinal axis of the channel and a width in a direction perpendicular to the longitudinal axis, and in which the individual pillar structures have a width to length ratio of at least 7.

The individual pillar structures can have a width to length ratio (aspect ratio) of at least 10.

The smallest distance (W) between the channel wall and a wall of a neighboring, non-touching, pillar structure can be greater than 0.9 times, greater than, for example, the smallest distance (B) between two neighboring pillar structures themselves.

It is an advantage of the present invention that by making use of pillar structures with a large width to length ratio, the edge effects in a fluid channel be reduced and possibly even are negligible.

The smallest distance (W) between the channel wall and a wall of an adjoining, non-touching pillar structure, and the smallest distance (B) between two adjoining pillar structures themselves, may be measured in the width direction of the channel, perpendicular on the longitudinal axis.

The wall can at least for some portion be flat, also called straight, in the longitudinal direction of the channel.

The pillar structures can be positioned in such a way that they determine a set of bound longitudinal and transversal micro-channels, whereby a first subset of longitudinal micro-channels is extending in the direction of the longitudinal axis and is defined through the wall of two pillar structures and a second subset of longitudinal micro-channels is extending in the direction of longitudinal axis and defined through the channel wall and a wall of a pillar structure, and wherein the smallest width (B) of the first subset can be smaller than or equal to the smallest width (W) of the second subset.

It is an advantage of the embodiments in accordance with the present invention that a low interpillar distance can be achieved, resulting in a high pressure in the system, while the edge effects can be limited, negligible or absent.

The pillar structures can be micro-fabricated pillar structures.

The pillar structures can have a width to length ratio of more than 12.

The smallest distance (B) between two neighbouring pillar structures can be between 0.5 and 0.8 times the smallest distance (W) between the channel wall and a wall of a neighbouring, non-touching, pillar structure.

The individual pillar structures can have a polygonal cross-section.

The individual pillar structures can have a substantial hexagonal cross-section.

The individual pillar structures may be limited in width by side walls of the pillar structures situated along the longitudinal axis of the channel and the length of the side walls may be at least 0.02, preferably 0.1 times the length of the pillar structures.

The channel and the micro-channels formed by the pillar structures may furthermore be limited on two sides by substrates.

The chemical reactor can be a liquid chromatography separation apparatus.

The channel wall can be formed by a membrane.

The present invention also relates to a mask for the lithographic application of a structure in a substrate for the making of a chemical reactor device, the mask comprising design elements for defining of an ordered set of pillar structures positioned in a channel of the chemical reactor device, whereby the individual pillar structures have a length in the direction of the longitudinal axis of the channel and a width in a direction perpendicular on the longitudinal axis, whereby the design elements are provided in the mask such that the resulting individual pillar structures have a width to length proportion of at least 7.

The design elements can be so defined such that the resulting pillar structures are positioned in the channel so that the smallest distance (W) between the channel wall defining the channel and a wall of a neighbouring, non-touching, pillar structure is greater than 0.9 times, for instance larger than, the smallest distance (B) between two neighbouring pillar structures themselves. The smallest distance (W) between the channel wall which defines the channel and a wall of a neighboring, non-touching, pillar structure can be greater than or equal to the smallest distance (B) between two neighboring pillar structures themselves. The smallest distance (W) between the channel wall which defines the channel and a wall of a neighboring, non-touching, pillar structure can be greater than the smallest distance (B) between two neighboring pillar structures themselves.

The design elements can be adapted so that the resulting pillar structures are bounded in width by pillar structure side walls situated according to the longitudinal axis of the channel and, wherein the length of the side walls is at least 0.02 times, preferably 0.1 times, even more by preference 0.2 times, of the length of the pillar structures.

The mask may be such that the formed wall of the channel be at least flat for some portion, also called the right section, in the longitudinal direction of the channel.

The present invention also relates to a method for the manufacture of a chemical reactor system, the method comprising lithographically implementing a channel with pillar structures including using a mask as described above.

## Brief description of the drawings

FIG. 1 illustrates a schematic representation of a part of a conventional chromatography column, whereby a solution for the edge problem is applied as provided for in the state of the art technology.

FIG. 2 illustrates a schematic representation of the dimensions of channels at the wall and away from the wall in the channel, as defined in an embodiment of the present invention.

FIG. 3 illustrates a schematic representation of a pillar structure as can be used in an embodiment in accordance with the present invention.

FIG. 4 illustrates the dispersion behavior for on-target features and off-target features, by which the advantage of the embodiments in accordance with the present invention is illustrated.

FIG. 5 shows the flow behavior in columns with on-target features (left) and off-target features (right) for pillar structures with smaller (above) and greater width to length aspect ratio, which illustrates the advantage of the embodiments in accordance with the present invention.

FIG. 6 illustrates the flow behavior in a channel with pillar structures with a high width to length aspect ratio, which indicates the advantage of the embodiments in accordance with the present invention.

FIG. 7 illustrates a schematic example of a pillar structure as defined on a mask and as implemented on a substrate corresponding to an embodiment of an aspect in accordance with the present invention.

FIG. 8 shows a schematic overview of a part of a chemical reactor with an input, an output and a pillar structure corresponding to an embodiment of an aspect in accordance with the current invention.

The figures are only schematic and not limiting. In the figures, the dimensions of some parts may be exaggerated and may not be to scale and are proposed for illustrative purposes. The dimensions and relative dimensions do not necessarily correspond to those of practical embodiments of the invention. Reference numbers in the claims should not be interpreted to limit the scope of the protection.

## Detailed description of illustrative embodiments of the invention

The present invention will be described referring to specific embodiments and to certain drawings but the invention is not limited thereto and is only limited by the claims.

Where in the present description and claims reference is made to micro-channels, reference is made to channels wherein at least one of the dimensions lies in the range of 50 $\mu$m to 1 $\mu$m.

Where in the present description and claims reference is made to an ordered set, reference is made to a set of elements which are not randomly positioned, but where a specific relationship exists between the distances of the elements to each other.

Where in the present description and claims reference is made to distribution or dispersion, reference is made to the spatial spread over an area or volume.

Where in the present description and claims reference is made to the permeability, reference is made to the flow rate at which a liquid can flow through the liquid channel with pillar structures.

In a first aspect the present invention relates to a chemical reactor device based on a fluid flow. Such a chemical reactor device is typically suitable for the propagation of a fluid plug, for example a liquid plug. The chemical reactor device according to embodiments of the present invention may be a liquid chromatography device, although embodiments are not restricted thereto. Another specific example is a gas chromatography device. The chemical reactor can more generally be suitable for producing certain components, such as intermediaries, for the synthesis of components such as synthesis of nanoparticles, for the separation and/or extraction of components, etc.

According to embodiments of the present invention the chemical reactor device comprises a substrate with a fluid channel. The substrate can be any suitable substrate, such as for example a polymer substrate, semiconductor substrate, a metal substrate, a ceramic substrate, or a glass or vitreous substrate. The substrate can, for example, be a typical microfluidic substrate. The fluid channel can be a channel that is formed in the substrate or can be a channel that is formed on the substrate. In a specific embodiment, the invention not being limited hereto, the fluid channel is provided as a recess in the substrate and a second substrate is provided on top of the first substrate so as to obtain a fluid channel that is closed at the top, side and bottom. Such a second substrate can be a membrane. In such an embodiment the channel is typically rectangular in cross-section. According to embodiments of the present invention the fluid channel also has an inlet and an outlet for the supply and the removal of the fluid, for example, the liquid. In the specific embodiment described above such an inlet and outlet can be provided by means of perforations in the first and/or the second substrate.

The fluid channel can have a length depending on the application. By the use of particular inlet structures and/or outlet structures, for example distributors, the necessary length can moreover be influenced. A typical width of the fluid channel can be chosen as necessary. The necessary width will typically depend on the selected length and vice versa. In one set of examples the width of the fluid channel $B_k$ may be selected in the range of 0.1 mm to 250 mm.

For the fluid channel a longitudinal axis can typically be defined, whereby the longitudinal axis is situated according to the direction of the average flow direction of the fluid in the channel, from inlet to outlet. By way of illustration the longitudinal axis in the schematic example of the chemical reactor 100 is shown in FIG. 2. In addition, also the substrate 110, the channel 120 itself and the channel wall 122 are indicated in FIG. 2. The channel wall 122 defines the fluid channel 120. It should be noted that the channel wall 122 can be defined by substrate material, but alternatively a membrane can also be used for defining the channel wall. The channel wall can, at least over a portion, be flat, also called straight, in the longitudinal direction of the channel. On some other parts of the channel wall, a partial pillar structure may be formed.

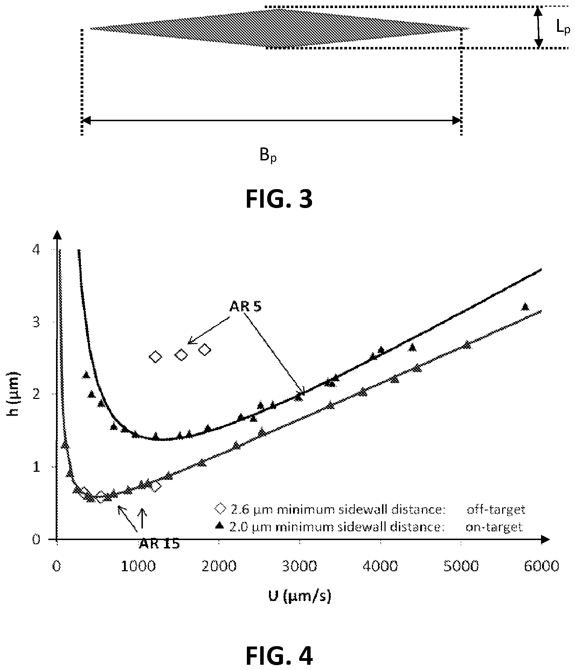

According to one embodiment of the present invention an ordered set of pillar structures 130 is also provided in the fluid channel 120. These pillar structures can be micro-fabricated pillar structures, although embodiments are not limited thereto. The pillar structures may be based on precision manufacturing techniques. According to embodiments of the present invention, the pillar structures 130 have an elongated shape. The specific geometric elongated shape of the pillar structures can be any appropriate shape. A cross-section of the pillar structure may for example be diamond-shaped, elliptical, oval, polygonal, etc. As an illustration, a magnified image of an exemplary pillar structure 130 is shown in FIG. 3, where the cross-section is diamond-shaped. In FIG. 3 the length $L_p$ of the pillar structure 130 is indicated, as well as the width $B_p$ of the pillar structure 130. Herein, the length of the pillar structure is the maximum dimension of the pillar structure in the direction $L_k$ of the longitudinal axis of the channel in which the pillar structures are positioned, and the width of the pillar structure is the maximum dimension of the pillar structure in the direction perpendicular to the longitudinal axis of the channel, that is the direction that also defines the width direction $B_k$ of the channel itself. The elongated shape of the pillar structure is according to embodiments of the present invention such that the pillar structures have a width-to-length ratio of at least 7, preferably more than 10 or more than 12. It was surprisingly found that for pillar structures having a large width-to-length aspect ratio, edge effects do not have a significant influence on the flow profile.

The number of pillars provided in the channel can be chosen depending on the objective (for example the separation capability) that is to be obtained. The number of pillars which can be provided on a particular row in the fluid channel is dependent on the width of the channel. There may, for example, be provided between 3000 and 3 pillars per mm width of the channel. The absolute width of the pillars may have been chosen in a range between 0.3 $\mu$m and 50000 $\mu$m. The absolute distance between the pillars in the channel remote from the wall can for example be chosen in a range between 0.05 $\mu$m and 2000 $\mu$m. In preferred embodiments of the present invention, the interpillar distance may be chosen from the range between 0.1 $\mu$m and 1000 $\mu$m, preferably between 0.3 $\mu$m and 3 $\mu$m. In addition, the size and shape of the pillars may vary, for example along the longitudinal axis of the channel.

In some specific embodiments of the present invention the pillar structures are positioned in the channel in such a way that the smallest distance (W) between the channel wall and a wall of a neighboring but not-touching, pillar structure is larger than 0.9 times, for example larger than, the smallest distance (B) between two neighboring pillar structures. It was surprisingly found that, although the width of the micro channels formed by the wall and the pillar structures is larger than the width of the micro channels formed by pillars remote from the channel wall, this actually does not cause edge effects when pillars are used as defined above. This surprising conclusion results from the fact that - apart from technological restrictions for the manufacture of the structures - the interpillar distance is no longer defined by the dimensions of the channels against the wall. This allows the interpillar distance to be chosen smaller than expected, which allows very efficient fluid channels to be made, for example, columns. It should be noted in this respect that this implementation can occur without loss of resolution or without introduction of additional dispersion.

In a specific embodiment of the present invention the chemical reactor is a liquid chromatography apparatus and the fluid channel is a separation column. It is an advantage that the separation efficiency of the system can be high due to the large lateral migration that occurs, while furthermore no edge effects occur or that these are negligible. In addition, because of the specific width-to-length ratio of the pillars, the necessary length of the column to obtain a certain degree of separation can be reduced.

It is an advantage of some embodiments of the present invention that they are based on sets of organized pillar structures, through which a low dispersion can be obtained. When the band dispersion is described by means of the Van Deemter equation, i.e.

$H = A + B/u + C.u$ whereby A, B, C are constants and u is the linear velocity of the mobile phase, structures according to the present invention also result in an exceptional low A value (representative for the dispersion due to flow differences in the paths) and a low B value (representative for the dispersion due to the longitudinal diffusion).

One or more additional components may also be present in the chemical reactor according to embodiments of the present invention, depending on the functionality of the chemical reactor, as known by one skilled in the art. In some embodiments of the present invention for example one or more distributors may be present, a detector may be present, which may be integrated or not in one of the substrates of the chemical reactor, a further micro-fluidized network may be present, electrodes may be present (for example in a chemical reactor based on electrophoresis or an electrochemical reactor), a membrane or a filter, a catalytic bed, a heat exchanger, a radiation source, etc.

In a specific embodiment of the present invention the pillar structures can also have a form as further described in a further aspect of the present invention.

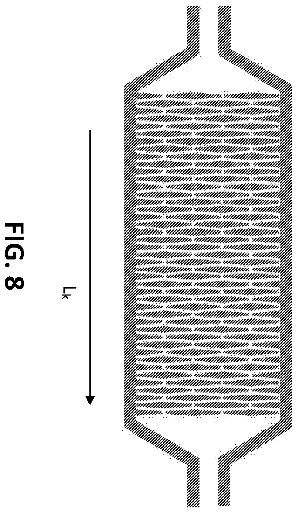

By way of illustration FIG. 8 shows a schematic overview of a part of a chemical reactor having an input, an output and a pillar structure in accordance with an embodiment of an aspect of the present invention.

In another aspect, the present invention also relates to a mask with a design for forming the pillar structures as described above. The mask can comprise typical design elements for defining an ordered set of pillar structures positioned in a fluid channel of a chemical reactor, whereby the pillar structures have a length in the direction of the longitudinal axis of the channel and a width in a direction perpendicular to the longitudinal axis, and whereby the design elements are provided in the mask in such a way that the resulting pillar structures have a width-to-length ratio of at least 7. In some embodiments of the present invention the design elements of the mask are optionally further provided such that the pillar structures produced in the channel on the basis of the mask have a smallest distance (W) between the channel wall and a wall of a neighboring, non-touching, pillar structure which is larger than 0.9 times, for example larger than, the smallest distance (B) between two neighboring pillar structures among themselves. The mask may furthermore comprise additional design features characteristic for a channel wall for defining a fluid channel in a substrate. Further designs elements from the mask may also be provided in such a manner that characteristics of the pillar structures and their relation to the channel as described in the first aspect, are obtained. Moreover the mask may also be adapted with design features to define characteristics of pillar structures for the chemical reactor as further described in the further aspect.

The present invention also relates to a method for manufacturing a chemical reactor, such as for example a chromatography device with a chromatography column, where the method comprises the use of a mask as defined above. The method may comprise the step of lithographic printing of a mask on a substrate to generate substrate features, and the etching of the substrate features to generate pillar structures. Other characteristics of the manufacturing process of the chemical reactor can be as known by one skilled in the art and are therefore not described in further detail here.

By way of illustration, embodiments of the present invention not being limited thereby, a comparative study is discussed below wherein the flow behavior and the occurrence or not of edge effects is studied in function of the use of pillar structures with a large width-to-length ratio.

Columns with a length of 1 cm and a width of 1 mm were produced, whereby pillar structures with a different width-to-length aspect ratio were used for different columns, in order to evaluate the effect of this aspect ratio. The interpillar distance as well as the length of the pillars (in the direction of the longitudinal axis of the column) was kept constant, in the present example 2.5 $\mu$m and 5 $\mu$m respectively, while the width of the pillar structures varied per column, from 10 $\mu$m (resulting in an aspect ratio of 2) to 125 $\mu$m (resulting in an aspect ratio of 25). The pillar structures, the inlet and the outlet were manufactured with the use of mid-UV photo-lithography on a (100) silicon wafer substrate. After the photo-lithographic process, the pillar structures were etched on the basis of a Bosch etching process, so that a depth of 8 micrometers was obtained. The photoresist was then removed, using an oxygen plasma etching and nitric acid. The inlet and outlet were further defined by a 800 μm etching using a Bosch etching process via the back side of the substrate. The reactor was closed by making use of a Pyrex substrate which was anodically bonded to the silicon substrate.

For measurement of the results the following experimental setup was used. An automatic valve system was used to inject the sample into the structure. For obtaining the propagation of the liquid phase a nitrogen pressure supply was used. During the injection step the inlet and the outlet of the circuit in which the mobile phase moves was closed, while during the subsequent sample preparation, the inlet and the outlet of the sample injection circuit was redirected to a capillary tube with high flow resistance so that a small leakage flow was created so as to avoid tail formation. In order to follow the flow behavior use was made of fluorescent dyes which were excited during registration by means of a mercury-vapor UV source. Visualization of the fluorescence was performed using an air-cooled CCD camera.

It was possible to determine that for pillar structures with an aspect ratio varying from 2 to 25, the plate height could be reduced from 2.6 μm to 0.5 μm, because a reduction in longitudinal dispersion could be obtained. When the Van Deemter equation was considered, a reduction of the B term (representative for the longitudinal dispersion) with a factor of 15 could be established for the use of an aspect ratio of 25 in relation to an aspect ratio of 2. A good separation behavior could therefore be established.

In addition to this result it could also be determined that edge effects which occur in systems with pillars having a small aspect ratio, were greatly reduced or even negligible in the structures according to the present invention. This could be established on the basis of the CCD images recorded on the chemical reactor on the chip.

FIG. 4 illustrates the effect of the width-to-length aspect ratio of the pillar structures on edge effects. The graph in FIG. 4 shows the difference in dispersion behavior (minimal plate height h as a function of the speed) for on-target structures, i. e. a column whereby the distance between the wall and a neighboring pillar is 2 micrometer, and off-target structures, whereby the distance between the wall and a neighboring pillar is 2.6 micrometer (thus greater than the interpillar distance). It can be clearly seen that for pillar structures with a width-to-length aspect ratio of 5 a variation in the distance to the wall has a large influence on the dispersion behavior, while for pillar structures having a width-to-length aspect ratio of 15, this variation in distance to the wall has no substantial influence. This illustrates that in reactors in which pillars with a high width-to-length aspect ratio are used, the edge effects can be reduced or even neglected.

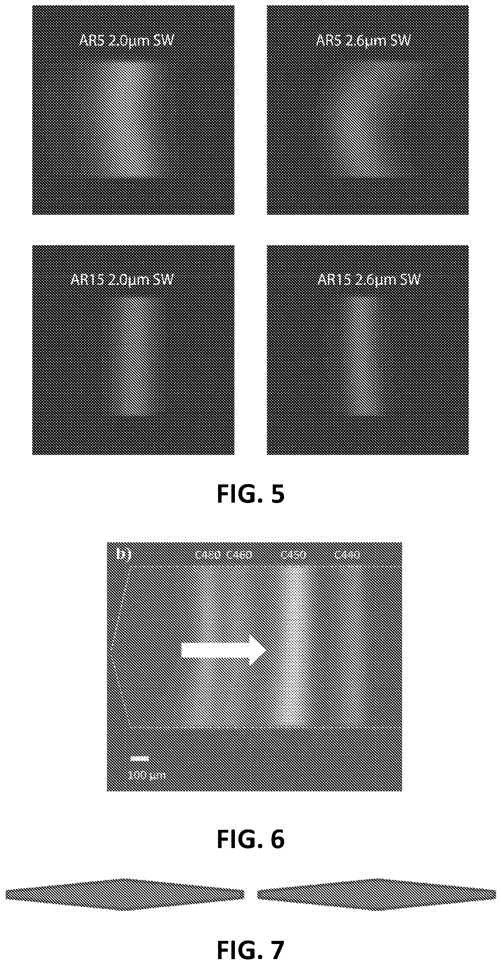

The same is illustrated in FIG. 5 in which the flow behavior of a liquid for the structures as described above is shown, by making use of fluorescence images for a liquid with a fluorescence marker. The images on the left show the on-target situation (i.e. with a 2 μm distance to the wall), which show relatively undisturbed flow profiles both for pillars with an aspect ratio of 5 and 15. The images on the right show the off-target situation (i.e. with a 2.6 μm distance to the wall, i.e. a distance greater than the interpillar distance), whereby a relatively undisturbed flow profile is obtained for pillars with an aspect ratio of 15, while for pillars with an aspect ratio of 5 the influence of edge effects on the flow profile is clearly visible.

Further by way of illustration a test is also reported here in which 4 fluorescent marker dyes (c440, c450, c460 and c480 in a 70/30 proportion of water/methanol) are separated in the first millimeter of a separation column wherein pillar structures having a width-to-length aspect ratio of 25 are provided. The column was functionalized with C8. The detection of the four bands as straight bands clearly indicates the absence of substantially contributing edge effects. An image of this detection is shown in FIG. 6. Through the efficient operation and the reduction of edge effects, for example a reduction of the column length can be obtained.

In a further specific aspect of the present invention, embodiments of a chemical reactor device are provided, based on a fluid flow, wherein the chemical reactor device also comprises a substrate with a fluid channel. This channel is also defined by a channel wall and also has an inlet and an outlet. For the channel also a longitudinal axis can be defined in accordance with the average flow direction of the fluid when it moves in the channel from the inlet to the outlet. The chemical reactor thereby also comprises an ordered set of pillar structures positioned in the channel, whereby the pillar structures have a length in the direction of the longitudinal axis of the channel and a width in a direction perpendicular to the longitudinal axis, and wherein the pillar structures have a width-to-length ratio of at least 7. According to embodiments of this aspect, the pillar structures are furthermore bounded in the width direction by side walls situated in accordance with the longitudinal axis of the channel, whereby the length of these side walls is at least 0.02 times, preferably at least 0.1 times, preferably at least 0.2 times, the length of the pillar structures. In other words, the sides of the pillar structures do not end in a tip, but end in a wall parallel with the wall of the channel. By way of example, the pillar structure may have in such a case a hexagonal cross-section. An illustration of such an exemplary pillar structure is shown in FIG. 7. Further characteristics of the chemical reactor may be as described in the first aspect, although the invention is not limited thereto. An advantage of these pillar structures is that they can be produced with a good degree of reproducibility, so that reliable structures are obtained. This is a contrast with pillar structures that end in a tip and whereby, mainly in the case of large width-to-length aspect ratios of the pillar structures, obtaining properly formed pillar structures is less reliable and reproducible. An additional advantage of the use of pillar structures as described in embodiments of the present aspect is that the interpillar distance can also be obtained in a uniform and reproducible manner for the set of pillar structures. The effect of this is that a better dispersion behavior (less dispersion) is obtained for the flow of the fluid that flows through the channel.

The present invention also relates to a mask with a design for forming the pillar structures as described above. The mask can typically comprise design elements for defining an ordered set of pillar structures positioned in a fluid channel of a chemical reactor, whereby the pillar structures have a length in the direction of the longitudinal axis of the channel and a width in a direction perpendicular to the longitudinal axis, and whereby the design elements are provided in the mask in such a way that the resulting pillar structures have a width-to-length ratio of at least 7 and the pillar structures moreover are bounded in the width direction by side walls situated according to the longitudinal axis of the channel, whereby the length of the side walls is at least 0.02 times, preferably at least 0.1 times, preferably at least 0.2 times, the length of the pillar structures. Further designs elements of the mask may also be provided in such a manner that characteristics of the pillar structures as described in the first aspect are obtained.

The present invention also relates to a method of manufacturing a chemical reactor, such as for example a chromatography device with a chromatography column, whereby the method comprises the use of a mask as defined above. The method may comprise the step of lithographic printing of a mask on a substrate to generate substrate features, and the etching of the substrate features to generate pillar structures. Other characteristics of the manufacturing process of the chemical reactor can be as known to the skilled person, and are therefore not described in further detail here.

**Claims**

1. A chemical reactor apparatus (100) based on a fluid flow, the chemical reactor apparatus (100) encompassing

- a substrate (110) with a fluid channel (120) defined by a channel wall (122), in which the channel (120) has an inlet and an outlet and where the channel (120) has a longitudinal axis, in accordance with the average fluid flow direction of a liquid in the channel (120) from inlet to outlet,
- an ordered set of pillar structures (130) positioned in the channel, with the individual pillar structures (130) having a length in the direction of the longitudinal axis of the channel and have a width in a direction perpendicular to the longitudinal axis,

the individual pillar structures (130) can have a width to length ratio of at least 7.

2. A chemical reactor apparatus (100) In accordance with claim 1, where the individual pillar structures (130) have a width to length ratio of at least 10.

3. A chemical reactor apparatus (100) in accordance to one of the previous claims, in which the smallest distance (W) between the channel wall (122) and a wall of an adjoining, non-touching, pillar structure (130) is greater than 0.9 times or greater than 1 time the smallest distance (B) between two adjoining pillar structures (130) mutually.

4. A chemical reactor apparatus (100) in accordance to claim 3, in which the smallest distance (W) between the channel wall (122) and a wall of an adjoining, non-touching pillar structure (130), and the smallest distance (B) between two adjoining pillar structures (130) mutually, have been measured in the width direction of the channel (120), perpendicular on the longitudinal axis.

5. A chemical reactor apparatus (100) in accordance to one of the previous claims, wherein the pillar structures (130) can be positioned in such a way that they determine a set of linked longitudinal and transversal micro-channels, in which a first subset of longitudinal micro-channels is extended in the direction of the longitudinal axis and is defined by the wall of two pillar structures (130) and a second subset of the longitudinal micro-channels is extended in the direction of longitudinal axis and defined by the channel wall (122) and a wall of a pillar structure (130), and in which the smallest width (B) of the first subset is smaller or equal to the smallest width (W) of the second subset.

6. A chemical reactor apparatus (100) in accordance with one of the previous claims, in which the pillar structures (130) are micro-fabricated pillar structures.

7. A chemical reactor apparatus (100) In accordance with one of the previous claims, where the smallest distance (B) between two adjoining pillar structures (130) can mutually be the smallest distance between 0.5 times and 0.8 times (W) between the channel wall (122) and a wall of an adjoining, non-touching, pillar structure (130).

8. A chemical reactor apparatus (100) in accordance with one of the previous claims, in which the individual pillar structures (130) have a polygonal cross-section or a hexagonal cross-section.

9. A chemical reactor apparatus (100) in accordance with claim 8, in which the individual pillar structures (130) in their width are bounded by sidewalls situated in accordance with the longitudinal axis of the channel and in which the length of the sidewalls are at least 0.02 times the length of the pillar structures (130).

10. A chemical reactor apparatus (100) in accordance with one of the previous claims, in which the channel (120) and the micro-channels formed by the pillar structures (130) are furthermore bounded by substrates on two sides.

11. A chemical reactor apparatus (100) in accordance with one of the previous claims, in which the chemical reactor is a liquid chromatography separation apparatus.

12. A chemical reactor apparatus (100) in accordance with one of the previous claims, in which the channel wall (122) is formed by a membrane and/or wherein the channel wall is flat at least for some portion in the longitudinal direction of the channel.

13. A mask for the lithographic application of a structure in a substrate for the manufacture of a chemical reactor apparatus (100), the mask encompassing design elements for the definition of an organized set of pillar structures (130) positioned in a channel (120) of a chemical reactor apparatus (100), whereby the individual pillar structures (130) have a length in the direction of the longitudinal axis of the channel (120) and a width in a direction perpendicular on the longitudinal axis, and whereby the design elements are provided in the mask such that the resulting individual pillar structures (130) have a width to length ratio of at least 7.

14. A mask in accordance with claim 13, wherein the design elements can be so defined that its resulting pillar structures (130) are so positioned in the channel (120) that the smallest distance (W) between the channel wall (122) defining the channel (120) and a wall of an adjoining, non-touching, pillar structure (130) is greater than 0.9 times or 1 time the smallest distance (B) between two adjoining pillar structures (130) mutually.

15. A method for the manufacture of a chemical reactor apparatus, whereby the method of lithographic implementation of a channel with the pillar structures includes using a mask as described above in one of the claims 13 to 14.

**Patentansprüche**

1. Chemische Reaktionsvorrichtung (100) basierend auf einem Fluidstrom, wobei die chemische Reaktionsvorrichtung (100) Folgendes umfasst

   - ein Substrat (110) mit einem Fluidkanal (120), der durch eine Kanalwand (122) definiert wird, in welcher der Kanal (120) einen Einlass und einen Auslass aufweist und wobei der Kanal (120) eine Längsachse entsprechend der durchschnittlichen Fluidstromrichtung einer Flüssigkeit im Kanal (120) vom Einlass zum Auslass aufweist,
   - eine geordnete Reihe von Säulenstrukturen (130), die im Kanal positioniert sind, wobei die einzelnen Säulenstrukturen (130) eine Länge in Richtung der Längsachse des Kanals aufweisen, sowie eine Breite in eine Richtung senkrecht zur Längsachse aufweisen,

   wobei die einzelnen Säulenstrukturen (130) ein Verhältnis zwischen Breite und Länge von zumindest 7 aufweisen können.

2. Chemische Reaktionsvorrichtung (100) nach Anspruch 1, wobei die einzelnen Säulenstrukturen (130) ein Verhältnis zwischen Breite und Länge von zumindest 10 aufweisen.

3. Chemische Reaktionsvorrichtung (100) nach einem der vorhergehenden Ansprüche, wobei der kleinste Abstand (W) zwischen der Kanalwand (122) und einer Wand einer angrenzenden nicht berührenden Säulenstruktur (130) größer als 0,9 Mal oder größer als 1 Mal dem kleinsten Abstand (B) zwischen zwei angrenzenden Säulenstrukturen (130) zueinander ist.

4. Chemische Reaktionsvorrichtung (100) nach Anspruch 3, wobei der kleinste Abstand (W) zwischen der Kanalwand (122) und einer Wand einer angrenzenden nicht berührenden Säulenstruktur (130), und der kleinste Abstand (B) zwischen zwei angrenzenden Säulenstrukturen (130) zueinander in Richtung der Breite des Kanals (120), senkrecht zur Längsachse gemessen wurden.

5. Chemische Reaktionsvorrichtung (100) nach einem der vorhergehenden Ansprüche, wobei die Säulenstrukturen (130) derart positioniert werden können, dass sie eine Reihe von verbundenen längs- und querliegenden Mikrokanälen bestimmen, in denen sich eine erste Teilmenge von längs liegenden Mikrokanälen in die Richtung der Längsachse erstreckt, und durch die Wand zweier Säulenstrukturen (130) definiert wird, und sich eine zweite Teilmenge der längs liegenden Mikrokanäle in die Richtung der Längsachse erstreckt, und durch die Kanalwand (122) und die Wand einer Säulenstruktur (130) definiert wird, und wobei die kleinste Breite (B) der ersten Teilmenge kleiner oder gleich der kleinsten Breite (W) der zweiten Teilmenge ist.

6. Chemische Reaktionsvorrichtung (100) nach einem der vorhergehenden Ansprüche, wobei die Säulenstrukturen (130) mikrofabrizierte Säulenstrukturen sind.

7. Chemische Reaktionsvorrichtung (100) nach einem der vorhergehenden Ansprüche, wobei der kleinste Abstand (B) zwischen zwei angrenzenden Säulenstrukturen (130) zueinander der kleinste Abstand zwischen 0,5 Mal und 0,8 Mal (W) zwischen der Kanalwand (122) und einer Wand einer angrenzenden nicht berührenden Säulenstruktur (130) sein kann.

8. Chemische Reaktionsvorrichtung (100) nach einem der vorhergehenden Ansprüche, wobei die einzelnen Säulenstrukturen (130) einen polygonalen Querschnitt oder einen hexagonalen Querschnitt aufweisen.

9. Chemische Reaktionsvorrichtung (100) nach Anspruch 8, wobei die einzelnen Säulenstrukturen (130) in ihrer Breite durch Seitenwände begrenzt sind, die sich entlang der Längsachse des Kanals befinden, und wobei die Länge der Seitenwände zumindest 0,02 Mal der Länge der Säulenstrukturen (130) entspricht.

10. Chemische Reaktionsvorrichtung (100) nach einem der vorhergehenden Ansprüche, wobei der Kanal (120) und die Mikrokanäle, die durch die Säulenstrukturen (130) gebildet werden, darüber hinaus auf zwei Seiten durch Substrate begrenzt werden.

11. Chemische Reaktionsvorrichtung (100) nach einem der vorhergehenden Ansprüche, wobei der chemische Reaktor eine chromatografische Trennvorrichtung für Flüssigkeit ist.

12. Chemische Reaktionsvorrichtung (100) nach einem der vorhergehenden Ansprüche, wobei die Kanalwand (122) durch eine Membran gebildet wird, und/oder wobei die Kanalwand zumindest in einigen Teilen in Längsrichtung des Kanals flach ist.

13. Maske für die lithografische Anwendung einer Struktur in einem Substrat zur Herstellung einer chemischen Reaktionsvorrichtung (100), wobei die Maske Gestaltungselemente zur Definition einer organisierten Reihe von Säulenstrukturen (130) umfasst, die in einem Kanal (120) einer chemischen Reaktionsvorrichtung (100) positioniert sind, wobei die einzelnen Säulenstrukturen (130) eine Länge in Richtung der Längsachse des Kanals (120) aufweisen, sowie eine Breite in eine Richtung senkrecht zur Längsachse, und wobei die Gestaltungselemente in der Maske vorhanden sind, sodass die sich ergebenden einzelnen Säulenstrukturen (130) ein Verhältnis zwischen Breite und Länge von zumindest 7 aufweisen.

14. Maske nach Anspruch 13, wobei die Gestaltungselemente derart definiert sein können, dass die sich ergebenden Säulenstrukturen (130) derart im Kanal (120) positioniert sind, dass der kleinste Abstand (W) zwischen der Kanalwand (122), die den Kanal (120) definiert, und einer Wand einer angrenzenden nicht berührenden Säulenstruktur (130) größer als 0,9 Mal oder größer als 1 Mal dem kleinsten Abstand (B) zwischen zwei angrenzenden Säulenstrukturen (130) zueinander ist.

15. Verfahren zur Herstellung einer chemischen Reaktionsvorrichtung, wobei das Verfahren der lithografischen Implementierung eines Kanals mit den Säulenstrukturen die Verwendung einer Maske umfasst, wie sie oben in einem der Ansprüche 13 bis 14 beschrieben ist.

**Revendications**

1. Appareil de réacteur chimique (100) basé sur un écoulement de fluide, l'appareil de réacteur chimique (100) incluant

   - un substrat (110) avec un canal de fluide (120) défini par une paroi de canal (122), dans lequel le canal (120) a une entrée et une sortie et où le canal (120) a un axe longitudinal, selon la direction d'écoulement de fluide moyen d'un liquide dans le canal (120) de l'entrée à la sortie,
   - un ensemble ordonné de structures de pilier (130) positionnées dans le canal, les structures de pilier individuelles (130) ayant une longueur dans la direction de l'axe longitudinal du canal et ayant une largeur dans une direction perpendiculaire à l'axe longitudinal,

   les structures de pilier individuelles (130) peuvent avoir un rapport largeur sur longueur d'au moins 7.

2. Appareil de réacteur chimique (100) selon la revendication 1, dans lequel les structures de pilier individuelles (130) ont un rapport largeur sur longueur d'au moins 10.

3. Appareil de réacteur chimique (100) selon l'une des revendications précédentes, dans lequel la plus petite distance (W) entre la paroi de canal (122) et une paroi d'une structure de pilier adjacente sans contact (130) est supérieure à 0,9 fois ou supérieure à 1 fois la plus petite distance (B) entre deux structures de pilier adjacentes (130) mutuellement.

4. Appareil de réacteur chimique (100) selon la revendication 3, dans lequel la plus petite distance (W) entre la paroi de canal (122) et une paroi d'une structure de pilier adjacente sans contact (130), et la plus petite distance (B) entre deux structures de pilier adjacentes (130) mutuellement, ont été mesurées dans la direction de la largeur du canal (120), perpendiculaire sur l'axe longitudinal.

5. Appareil de réacteur chimique (100) selon l'une des revendications précédentes, dans lequel les structures de pilier (130) peuvent être positionnées de façon à ce qu'elles déterminent un ensemble de micro-canaux longitudinaux et transversaux reliés, dans lequel un premier sous-ensemble de micro-canaux longitudinaux est étendu dans la direction de l'axe longitudinal et est défini par la paroi de deux structures de pilier (130) et un second sous-ensemble de micro-canaux longitudinaux est étendu dans la direction d'axe longitudinal et défini par la paroi de canal (122) et une paroi d'une structure de pilier (130), et dans laquelle la plus petite largeur (B) du premier sous-ensemble est inférieure ou égale à la plus petite largeur (W) du second sous-ensemble.

6. Appareil de réacteur chimique (100) selon l'une des revendications précédentes, dans lequel les structures de pilier (130) sont des structures de pilier micro-fabriquées.

7. Appareil de réacteur chimique (100) selon l'une des revendications précédentes, dans lequel la plus petite distance (B) entre deux structures de pilier adjacentes (130) peut être mutuellement la plus petite distance entre 0,5 fois et 0,8 fois (W) entre la paroi de canal (122) et une paroi d'une structure de pilier adjacente sans contact (130).

8. Appareil de réacteur chimique (100) selon l'une des revendications précédentes, dans lequel les structures de pilier individuelles (130) ont une section polygonale ou une section hexagonale.

9. Appareil de réacteur chimique (100) selon la revendication 8, dans lequel les structures de pilier individuelles (130) dans leur largeur sont délimitées par des parois latérales situées selon l'axe longitudinal du canal et dans lequel la longueur des parois latérales fait au moins 0,02 fois la longueur des structures de pilier (130).

10. Appareil de réacteur chimique (100) selon l'une des revendications précédentes, dans lequel le canal (120) et les micro-canaux formés par les structures de pilier (130) sont en outre délimités par des substrats sur deux côtés.

11. Appareil de réacteur chimique (100) selon l'une des revendications précédentes, dans lequel le réacteur chimique est un appareil de séparation par chromatographie liquide.

12. Appareil de réacteur chimique (100) selon l'une des revendications précédentes, dans lequel la paroi de canal (122) est formée par une membrane et/ou dans lequel la paroi de canal est plate au moins sur une portion dans la direction longitudinale du canal.

13. Masque pour l'application lithographique d'une structure dans un substrat pour la fabrication d'un appareil de réacteur chimique (100), le masque comportant des éléments de conception pour la définition d'un ensemble organisé de structures de pilier (130) positionnées dans un canal (120) d'un appareil de réacteur chimique (100), moyennant quoi les structures de pilier individuelles (130) ont une longueur dans la direction de l'axe longitudinal du canal (120) et une largeur dans une direction perpendiculaire sur l'axe longitudinal, et moyennant quoi les éléments de conception sont prévus dans le masque de sorte que les structures de pilier individuelles résultantes (130) aient un rapport largeur sur longueur d'au moins 7.

14. Masque selon la revendication 13, dans lequel les éléments de conception peuvent être définis de sorte que ces structures de pilier résultantes (130) soient positionnées dans le canal (120) pour que la plus petite distance (W) entre la paroi de canal (122) définissant le canal (120) et une paroi d'une structure de pilier adjacente sans contact (130) soit supérieure à 0,9 fois ou 1 fois mutuellement la plus petite distance (B) entre deux structures de pilier adjacentes (130) mutuellement.

15. Procédé de fabrication d'un appareil de réacteur chimique, moyennant quoi le procédé d'implémentation lithographique d'un canal avec des structures de pilier comprend l'utilisation d'un masque tel que décrit ci-dessus dans l'une des revendications 13 à 14.

**FIG. 1**

**FIG. 2**

**FIG. 3**

◇ 2.6 μm minimum sidewall distance:  off-target
▲ 2.0 μm minimum sidewall distance:  on-target

**FIG. 4**

**FIG. 5**

**FIG. 6**

**FIG. 7**

$L_k$

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2541245 A
- WO 2012025224 A
- WO 2008142160 A

**Non-patent literature cited in the description**

- **VERVOORT et al.** *Anal. Chem.,* 2004, vol. 76, 4501-4507